# EUROPÄISCHE PATENTANMELDUNG

(11) **EP 0 798 208 A2**
(43) Veröffentlichungstag der Anmeldung: **01.10.1997**
(21) Anmeldenummer: 97105204.8
(22) Anmeldetag: 27.03.1997
(51) Int. Cl.: B64F 1/08

(54) **Fluggeräte-Startwinde**

(30) Priorität: 28.03.1996 DE 19612435; 28.03.1996 DE 29605824 U
(71) Anmelder: Höck, Karl, 86316 Friedberg (DE)
(72) Erfinder: Höck, Karl, 86316 Friedberg (DE)

(57) **Zusammenfassung**

Die Fluggerräte-Startwinde INTEGRALE (siehe Bild 1), ist eine Weiterentwicklung aus den technischen Standards der Winde H125 D, die den Stand der Technik repräsentiert.

Die Startwinde ist vorgesehen für das Hochschleppen von Segelflugzeugen auf Segelfuggeländen in Europa und weltweit. Hierbei werden Ausklinkhöhen von 350 bis 600 m, je nach ausgelegter Seillänge bzw. Windverhältnissen erreicht.

Das Entwicklungsziel bestand darin, ein ökonomisches, modernes und leistungsfähiges Gerät mit erweiterter Startkapazität zu schaffen. Die Hauptbaugruppen sollten aus marktgängigen Serienteilen nach europäischen bzw internationalen Standards bestehen, um eine Senkung der Herstellkosten zu erreichen.

Dieses Ziel wurde durch das Aufbauprinzip der Längsschleppwinde mit bis zu sechs Seiltrommeln ( Standard Zwei und vier ) und den über das Fahrerhaus gezogenen Seilführunsvorrichtungen ( 21,22 ) in allen Punkten erreicht.

**Bei dieser Startwinde ist sowohl der Schleppantrieb samt Zusatzaggregaten als auch der Fahrstand mit den Bedienungsorganen voll in das mobile Tragfahrzeug der Winde integriert.**

Hierzu werden marktgängige Sattelzugmaschinen nach europäischen Standards oder Pick-up Fahrzeuge nach internationalen Standards als Tragfahrzeug verwendet. Die wichtigsten Zusatzbaugrupen sind ebenfalls marktgängig und genügen europäischen Standards. Dadurch wird nicht zuletzt auch die wesentliche Verminderung der Hersellkosten erreicht.

## Beschreibung

### Technisches Gebiet der Erfindung

Die Erfindung ist auf dem Gebiet der Zubehörentwicklung für Fluggeräte, insbesonders für Segelflugzeuge angesiedelt. Die Produktionsformen entsprechen den des allgemeinen Maschinenbaues und auch des Fahrzeugbaues, da es sich um ein mobiles Gerät handelt. Zu dem Kundenkreis gehören Segelflugvereine, Flugplätze bzw. Flugschulen.

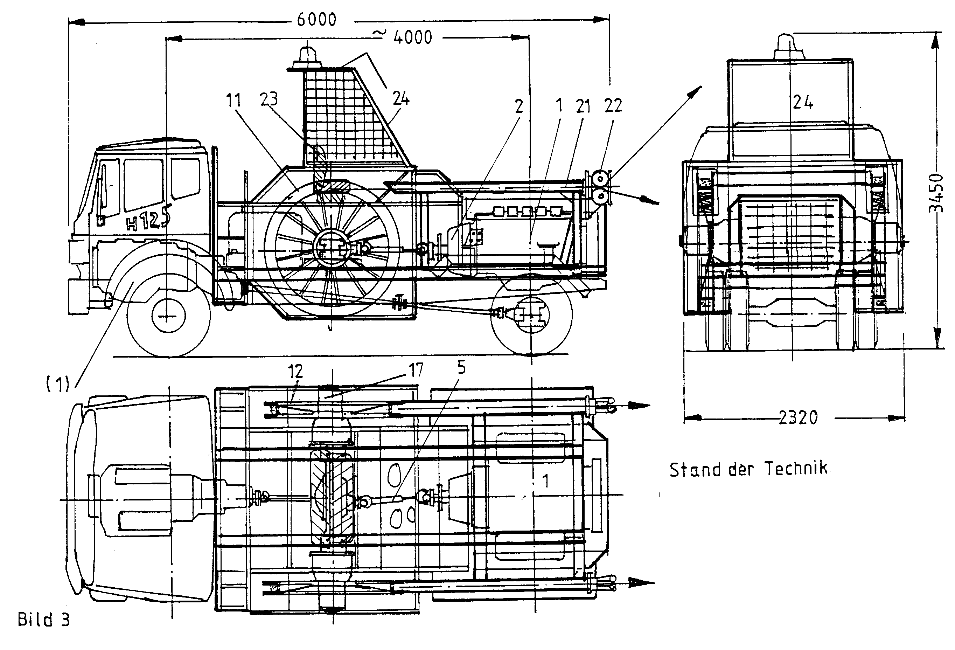

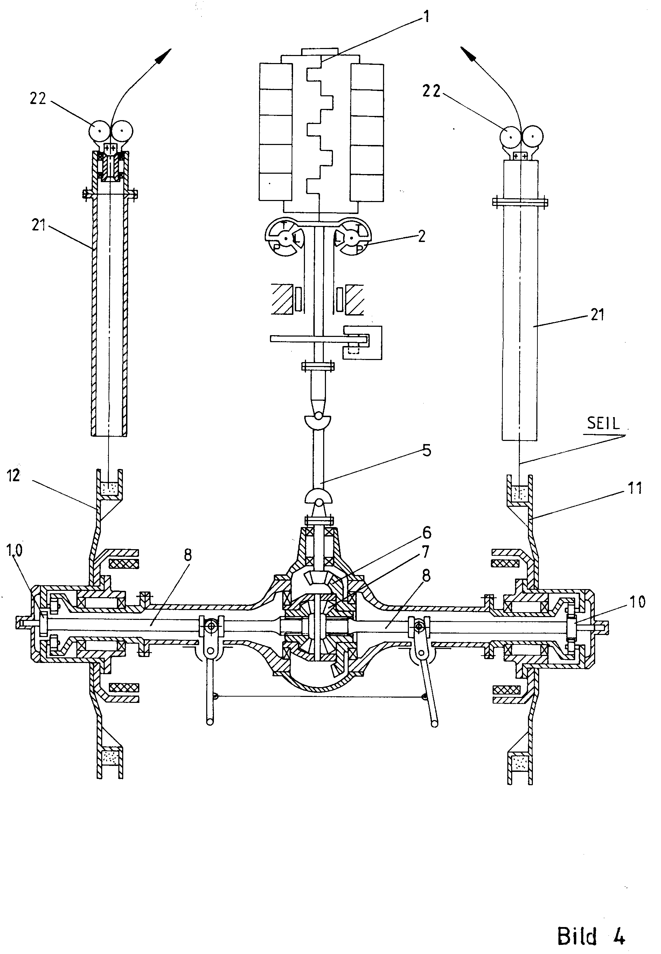

### Stand der Technik (siehe Bild 3 u. Bild 4).

Die Hauptfunktion einer Startwinde besteht darin, nicht motorisierte Fluggeräte auf die Ausklinkhöhe zu befördern. Diese erlaubt für den anschließenden freien Flug eine Aufwindsuche oder zumindest einen längeren Gleitflug. Zu diesem Zweck werden schon seit Jahrzehnten motorisierte Startwinden eingesetzt. Die Geräte arbeiten allesamt so, daß während des Start- bzw. Schleppvorganges ein ca. 1000 m langes Stahlseil auf eine Trommel aufgewickelt wird. Das Seil beschleunigt das Fluggerät sehr schnell bis über die Abhebegeschwindigkeit, wobei die Auftriebskraft des Fluggerätes dann einen steilen Steigflug erlaubt. Während des gesamten Startvorganges, bei dem das Seil bis zur Ausklinkhöhe eingezogen wird, muß durch die Seilkraft aus dem Schleppantrieb eine optimale Beschleunigungs- und Steigleistung sichergestellt werden.

Die Startwinden sind meist auf mobilen Fahrzeugen bzw. Anhängern plaziert, da sich deren Standort zweckmäßigerweise an der Windrichtung orientiert. Im Zuge der Entwicklung der modernen Kunststoffsegelflugzeuge zu immer höheren Startgewichten hat sich auch eine Leistungssteigerung der Schleppantriebe bis zu ca. 300 kW ergeben. Dadurch sind sichere Starts und optimale Ausklinkhöhen gewährleistet. Es haben sich deshalb in letzter Zeit LKW - Motoren mit angeflanschten hydraulischen Drehmomentwandlern stark durchgesetzt. Der Drehmomentwandler erlaubt einen stufenlosen, harmonischen Schleppvorgang sowie eine beträchtliche Leistungssteigerung bei steilen Steigfluglagen.

Mir sind aus diesem Problemkreis, was Startwinden betrifft, bisher lediglich Patente der Firma Tost, München ( PAT. 2644795 und 3246109.3 ) bekannt geworden.

### Grundproblematik der Erfindung

Alle mir bekannten Startwindenkonstuktionen verfügen über einen separaten Schleppantrieb ( 1 u.2 ) meist mit eigenem Fahrstand ( 23 ), der dann komplett auf einen LKW mit wiederum eigenem Antrieb aufgesetzt wird (siehe Bild 3 u. Bild 4 ). Dies führt zwangsläufig zu großen Baugewichten und Baulängen, sowie zu teuren und aufwendigen Konstruktionen. Nach diesem Prinzip werdem ausschließlich ***Zweitrommel - Längsschleppwinden*** hergestellt, das bedeutet, daß die Seileinlaufrichtung parallel zur Längsachse des Fahrzeuges liegt und bisher aus konstruktiven Gründen maximal 2 Seiltrommeln auf den gleichen Antrieb zugeschaltet wurden. Das Entwicklungsziel lag in einer Vereinfachung, Kostensenkung, Modernisierung und Kapazitätserweiterung ( bis zu sechs Seiltrommeln durch Parallelschaltung der Trommelachsen konstruktiv möglich ).

### Erfindung, für die in den Schutzansprüchen Schutz begehrt wird

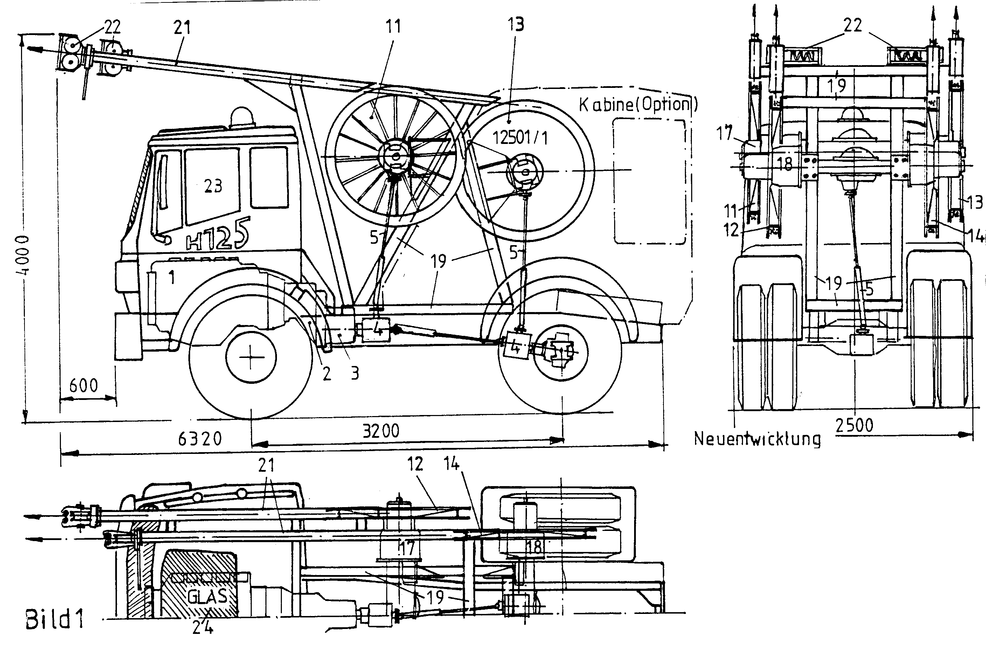

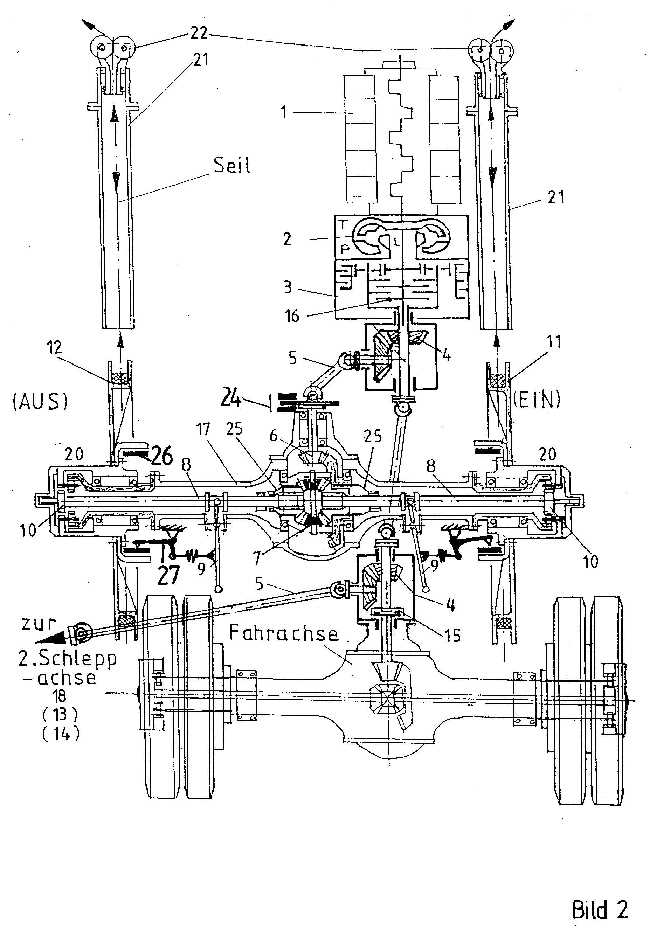

Das Wesentliche der Erfindung besteht nun darin, daß der Antrieb und das Führerhaus incl. aller dazugehörenden Nebenaggregaten des mobilen LKW voll in die eigentliche Schleppwinde integriert sind. ( siehe Bild 1 u. Bild 2 ). Als Basiseinheit wird hierzu ein Automobil mit der erforderlichen Antriebsleistung verwendet. Zur Herstellung der für den Windenfahrer notwendigen Sichtverhältnisse werden die Seilführungsrohre ( 21 ) ***über das Fahrerhaus nach vorne*** geführt. Dadurch befindet sich der Seileinlauf ( 22 ) vor dem Fahrerhaus und es kann der Schleppvorgang durch die Frontscheibe und das Dachfenster (24) vom Fahrersitz aus beobachtet werden. Erstmalig wir in dieser Startwinde aus Bedienungs - und Vereinfachungsgründen die Ausziehbremsanlage mit den Trommel - Schaltkupplungen gekoppelt.

### Vorteile der Erfindung

Diese Bauart führt zu einer sehr kompakten und einfachen Konstruktion, welche in der Herstellung zu einer starken Kostensenkung führt. Das Design und der Bedienungskomfort genügen höchsten Ansprüchen an ein modernes Gerät. Zum Beispiel kann der Klimaschutz und der Komfort eines modernen Automobils voll ausgenutzt werden.

Die raumsparende Bauweise in Verbindung mit dem Antriebskonzept erlaubt außerdem den mühelosen Aufbau von weiteren Schleppachsen mit jeweils 2 Seiltrommeln oder aber z.B. den einer Wohnkabine. So läßt sich nach dem Baukastenprinzip standardmäßig eine ***Viertrommel - Längsschleppwinde*** mit doppelter Startkapazität relativ preisgünstig herstellen.

Auch bezüglich der Wartungs-und Bedienungsfreundlichkeit ergeben sich durch die Einsparung eines Antriebsaggregates beträchtliche Vorteile.

Die tiefe Schwerpunktlage und die hohe Leistung des Fahrmotors führen in Verbindung mit einer gleichmäßigen Gewichtsverteilung zu guten Fahreigenschaften und Standsicherheit des Gerätes. Dies erlaubt einen sicheren Betrieb und eine sehr hohe Mobilität bei Standortwechseln.

### Ausführung der Erfindung

### Aufbau:( siehe Bild 1 und Bild 2 )

Der Schleppantrieb ist voll in den Antrieb des Tragfahrzeuges intergriert, das Fahrerhaus dient als Fahrstand. Die großen Seiltrommeln ( 11-14 ) aus Aluguß werden von separaten LKW - Hinterradachsen, die zu Trommelachsen umgerüstet sind ( 17+18 ), gelagert und getrieben. Diese sind über einen Zwischenrahmen ( 19 ) direkt auf den Rahmen des Tragfahrzeuges montiert. Jede Tommelachse verfügt über zwei mechanische Schaltkupplungen ( 20 ) zur Herstellung des Kraftflusses an der gewünschten Seiltrommel. Zur Kraftübertragung vom Fahrantrieb auf die Trommelachsen ist
***ein zuzätzliches, schaltbares Kegelradgetriebe ( 4 ) mit vertikaler Kardanwelle ( 5 ) in den Fahrstrang zur Hinterachse zwischengeschaltet.***

Dieses Getriebe ist mit einer Schalteinrichtung versehen, welche eine Abtrennung des Fahrantriebes erlaubt. Der Antrieb von weiteren Trommelachsen kann über zusätzliche Kegelradgetriebe oder auch über Riementriebe von von der erstgetriebenen Trommelachse aus erfolgen.

Die Seilführung auf die schmalen Seiltrommeln kann ohne Spulvorrichtungen in den langen, horizontalen Vierkantrohren erfolgen (Seilfürungsrohre, 21 ). Den Abschluß bildet jeweils ein separater, drehbarer Rolleneinlauf mit Kappvorrichtung ( 22 ) kurz vor dem Fahrerhaus. Wegen der Sichtverhältnisse auf das zu schleppende Fluggerät vom Fahrersitz aus, sind die ***Seilführungsrohre nach vorne über des Fahrerhaus geführt.***

Die Seilführungsrohre ( 21 ) sind Bestandteil des Zwischenrahmens ( 19 ). Ein Glasdach ( 24 ) im Führerhaus sorgt für den nötigen Sichtbereich während des Schleppvorganges.

### Kraftfluß: (Siehe Bild 2)

***Im Schleppbetrieb*** wird die Leistung des Fahrmotors ( 1 ) über den Drehmomentwandler ( 2 ) des Lastschaltgetriebes ( 3 ) und das Kegelradgetriebe ( 4 ) auf die Kardanwelle ( 5 ) der eingeschalteten Schleppachse geleitet. Innerhalb der Schleppachse ( 17 ) erfolgt der Kraftfluß über den Eintriebs-Kegelradsatz ( 6 ) und das blockierte Differentialgetriebe ( 7 ) auf die beiden Steckwellen ( 8 ).

**Durch Verschieben einer Steckwelle mit dem Schalthebel ( 9 ) wird das darauf befestigte Sonnenritzel in den entsprechenden Außenplanetensatz ( 10 ) der Schleppachse eingerückt.**
Durch diese Trommelkupplung ( 20 ) wird der Kraftschluß zu der darüberliegenden Seiltrommel ( 11 ) geschaltet. Die anderen Seiltrommeln ( 12, 13, 14 ) sind bei ausgefahrenen Planetenritreln der Schleppachsen ( 17+18 ) aus dem Kraftfuß genommen. Die Tommelkupplungen können ***alternativ*** auch durch den Einbau von 2 Differentialsperren ( 25 ) am inneren Ende der Steckwellen gebildet werden.

Mit dem Gaspedal läßt sich Drehmoment und Drehzahl der jeweils eingeschalteten Seiltrommel über Motorleistungsabgabe und Drehmomentwandler stufenlos regeln. Das Schaltgetriebe ist über eine Kupplung ( 16 ) in einem Gang (Fahrstufe) geschaltet und festgelegt, sodaß die Fahrgang - Schaltautomatik ohne Funktion ist. Der Fahrantrieb ist durch eine Kupplung ( 15 ) im Antriebsstrang zur Hinterachse unterbrochen.

***Im Fahrbetrieb*** läßt sich das Fahrzeug bei eingeschalteter Fahrkupplung mit dem Lastschaltgetriebe in Automatikstellung bewegen. Alle Trommelkupplungen sind ausgeschaltet und somit ohne Kraftschluß. Gegebenenfalls ist der Kraftschluß zu den Trommelachsen auch schon im Kegelradgetriebe unterbrochen.

### Bremsanlage

Die Startwinde verfügt über 3 Bremsanlagen, die unterschiedliche Funktionen erfüllen:
***1. Die Fahrzeugbremsanlage***, in deren Funktion nicht eingegriffen wird.
***2. Die Betriebsbremse für den Schleppbetrieb*** ( 24 ), welche im Antiebsstrang zu den Trommelachsen am Ende der ersten Kardanwelle angeordnet ist. Diese Bremse dient dem Abbremsen des Antriebes während dem Schleppvorgang. Dies ist notwendig zum Einlegen der einzelnen Trommelschaltkupplungen und nach dem Einziehen des Seiles bei ausgeklinktem Luftfahrzeug, sowie bei eventuellen Störungen. Mit dieser Bremse, die über das Bremspedal des Fahrzeugs bedient wird, kann die Seiltrommel bzw. die Kardanwelle schnell zm Stillstand gebracht werden.
***3. Die Seilausziehbremsanlage*** ( 26 ), die zum Ausziehen der Seile nach den Starts eingesetzt wird um ein Nachlaufen der Seiltrommeln zu verhindern. Dadurch bleibt das Seil immer straff um die Seiltrommeln gewickelt und kann nicht von diesen abspringen. Diese Bremsen sind jeweils als einzelne Trommelbremsen in jeder Trommelachse angeordnet und auch einzeln regulierbar. Erstmals ist die Betätigung der Seilauszugsbremsen mit der Trommelkupplung gekoppelt, sodaß bei ausgeschalteten Trommeln bereits leicht angebremst wird. Beim Einschalten der Trommelkupplung im Schleppbetrieb wird diese Bremswirkung automatisch aufgehoben. Die Wirkung jeder Trommelbremse ist mit den Schalthebeln ( 9 ) regulierbar.

## Patentansprüche

1. **Mobile Startwinde zum Hochschleppen von nicht eigenstartfähigen Fluggeräten, hier im speziellen Fall von Segelflugzeugen ausgeführt und**
dadurch gekennzeichnet,
daß der motorische Antrieb des mobilen Tragfahrzeuges für den Antrieb von zwei oder vier oder max. sechs Seiltrommeln zum Starten der Fluggeräte verwendet wird (Schleppantrieb).

2. **Mobile Startwinde nach Anspruch 1,**
dadurch gekennzeichnet,
daß das Fahrerhaus des mobilen Tragfahrzeuges inclusive der Bedienungseinrichtungen im Schleppbetrieb zugleich als Fahrstand für den Windenfahrer Verwendung findet .

3. **Mobile Startwinde nach Anspruch 1,**
dadurch gekennzeichnet,
daß die max. sechs Seilführungsvorrichtung nach vorne über das Fahrerhaus geführt werden, um die notwendigen Sichtverhältnisse vom Fahrersitz aus zum geschleppten Fluggerät zu erhalten.

4. **Mobile Startwinde nach Anspruch 1,**
dadurch gekennzeichnet,
daß die Anzahl der Seiltrommeln mit den entsprechenden Seilführunsvorrichtungen in Längsrichtung des Fahrzeugs mehr als zwei beträgt und dies durch Variation der Spurweiten der auf LKW-Achsen montierten Seiltrommeln ermöglicht wird.

5. **Mobile Startwinde nach Anspruch 1,**
dadurch gekennzeichnet
daß die Schalteinrichtungen zum Ein- und Auskuppeln der einzelnen Seiltrommeln in den Planetengetrieben der Trommelachsen installiert werden, und zwar so, daß die Sonnenräder dieser Getriebe in Achsrichtung verschoben und somit der Zahneingriff schaltbar unterbrochen werden kann.

6. **Mobile Startwinde nach Anspruch 1,**
dadurch gekennzeichnet
daß die Betätigungseinrichtungen der Bremsen, welche zum Ausziehen der Seile verwendet werden mit den Betätigungseinrichtungen der Trommelschaltkupplungen gekoppelt sind.
